# FASCICULE DE BREVET EUROPEEN

(11) **EP 1 107 048 B1**
(45) Date de publication et mention de la délivrance du brevet: **20.12.2006**
(21) Numéro de dépôt: 00430031.5
(22) Date de dépôt: 22.11.2000
(51) Int. Cl.: G02F 1/13357, B23K 26/08, G02B 6/00, B23K 26/36

(54) **Procédé et dispositif d'usinage par laser de guides de lumière, guides de lumière et écrans rétro-éclairés incorporant ces guides**
Verfahren und Vorrichtung zur Lichtleiterherstellung mit einem Laser, Lichtleiter und rückwärtig beleuchtete Bildschirme mit diesen Lichtleitern
Method and device for lightguides treatment by laser, fabricated lightguides and backlight screens comprising these guides

(30) Priorité: 09.12.1999 FR 9915590; 11.07.2000 US 613477
(43) Date de publication de la demande: 13.06.2001
(73) Titulaire: PHLOX, 13854 Aix-Les-Milles, Cedex 3 (FR)
(72) Inventeur: Blanc, Christophe, 84120 Pertuis (FR); Chazallet, Frédéric, 13013 Marseille (FR)
(74) Mandataire: Domange, Maxime

(56) Documents cités:
- EP-A- 0 945 674
- WO-A1-99/06881
- US-A- 4 611 318
- US-A- 4 912 487

## Description

La présente invention est relative à un procédé et à un dispositif d'usinage par laser de guides de lumière, aux guides de lumière obtenus et aux écrans rétro-éclairés incorporant ces guides.

L'invention s'applique plus particulièrement aux guides de lumière en forme de plaque mince, généralement plane, constitués d'un matériau translucide ou transparent, en particulier du verre, du polycarbonate ou du polyméthacrylate de méthyle.

De tels guides rentrent notamment dans la constitution de dispositifs d'affichage lumineux tels que des enseignes, et dans la constitution de terminaux d'affichage d'ordinateurs et d'appareils électroniques similaires, en particulier pour le rétro-éclairage d'écrans à cristaux liquides ; dans ces applications notamment, de la lumière produite par une source est introduite dans le guide par une (ou plusieurs) de ses faces latérales (tranches), la lumière sortant du guide par une (ou deux) de ses deux faces principales généralement parallèles entre elles.

Dans ces applications notamment, on cherche à obtenir une densité du flux lumineux sortant par la face principale, qui soit la plus homogène possible ; on recherche également à éviter ou limiter les pertes ou fuites de lumière ; pour l'éclairage par l'arrière d'afficheurs à cristaux liquides (LCD), il est primordial que ces performances soient optimisées et que la masse, l'encombrement et le coût soit minimisés.

Pour fabriquer de tels guides, il est connu de former, généralement par moulage, sur la face principale du guide destinée à rayonner la lumière et à être accolée à la face arrière du LCD, des saillies et/ou des dépressions qui sont de forme régulière, par exemple prismatique et qui sont régulièrement disposés sur toute ou partie de la surface de cette face principale ; une autre technique consiste à former sur cette face des masques "ponctuels" constitués par un revêtement appliqué sur cette face et percé d'orifices pour laisser passer la lumière.

Par ailleurs il est connu du document EP-A-945 674 d'usiner des motifs diffusants linéaires d'espacement régulièrement variable à l'aide d'un faisceau laser.

La présente invention a pour objet de proposer un procédé amélioré de fabrication de ces guides de lumière visible.

Un objectif est de proposer un dispositif pour la mise en oeuvre de ce procédé.

Un objectif est de proposer des guides de lumière et des dispositifs d'affichage incorporant ces guides, qui soient améliorés.

A cet effet et selon un premier aspect, on expose une face principale du guide, qui est destinée à diffuser la lumière (visible), à un rayonnement laser suffisamment intense et/ou suffisamment prolongé pour former à la surface de ladite face principale une dépression (dite centrale) de forte amplitude ainsi qu'une pluralité (plusieurs dizaines ou centaines) de saillies et/ou dépressions (dites périphériques) irrégulières, qui sont disposées de part et d'autres de (et/ou qui entourent) ladite dépression centrale, et dont l'amplitude (en surface et en relief) est irrégulière et inférieure à l'amplitude de ladite dépression centrale.

De préférence à cet effet on soumet ladite face principale à un rayonnement dont l'intensité est située dans une plage allant de 10⁴ à 10⁷ W/cm², en particulier allant de 3.10⁴ à 3.10⁶ W/cm² ; pour obtenir un faisceau laser concentré à partir du faisceau émis par une source disponible dans le commerce, on intercale sur le trajet du faisceau un concentrateur constitué de préférence par un miroir paraboloïde ; on prévoit par ailleurs des moyens de maintien du miroir à une distance prédéterminée de ladite face principale.

La présence de ces déformations et irrégularités, tant à la surface de la face principale de la plaque guide qu'à l'intérieur de celle-ci, est à l'origine d'une diffusion améliorée et régulièrement répartie de la lumière sortant par cette face principale du guide ; il est vraisemblable que la présence des saillies et dépressions irrégulières contribue notablement aux bonnes performances constatées qui ressortent des mesures effectuées sur des échantillons traités conformément à l'invention.

A cet effet il est important d'obtenir en sortie du concentrateur un faisceau comportant une zone (ou tache) focale de petites dimensions ; de préférence le diamètre de cette tache focale est situé dans une plage allant de 10 à 200 microns, en particulier allant de 25 à 100 microns.

Il est en outre important de maintenir le plan focal contenant cette tache au voisinage immédiat de la surface à usiner, en particulier à une distance de celle-ci de l'ordre de plus ou moins 10 microns à plus ou moins 100 microns.

A cet effet, et en particulier pour l'usinage de matériaux transparents en plaque dont l'épaisseur varie d'une plaque à l'autre et/ou varie d'une zone à l'autre d'une plaque déterminée, il est nécessaire de prévoir des moyens dynamiques de positionnement du concentrateur par rapport à cette surface, afin que la distance entre la surface de la plaque et le plan focal reste dans ces limites ; à cet effet, le miroir est lié mécaniquement à une pièce formant un talon d'appui pneumatique sur cette surface pour obtenir une distance constante entre le talon et la surface (laquelle distance est généralement de l'ordre de 10 à 100 microns).

Dans un mode de réalisation préféré où la dépression centrale s'étend selon une ligne continue et rectiligne, celle-ci forme une rigole le long de chacun des bords de laquelle s'étend une zone (ou bande latérale) de saillies et dépressions irrégulièrement formées et disposées ; cette rigole (ou rainure) présente de préférence une profondeur allant de 5 à 50 microns, une largeur allant de 5 à 200 microns, en particulier voisine de 50 à 100 microns, et chacune desdites zones s'étend sur une largeur de valeur sensiblement égale à celle de la rigole centrale ; de préférence la largeur moyenne d'un motif diffusant (comportant ladite rainure et les deux bandes latérales) est supérieure à 100 microns et inférieure à 400 microns, en particulier comprise entre 100 et 250 microns.

De préférence le dispositif d'usinage comporte :
- une table apte à supporter une plaque de matériau transparent à usiner,
- une source laser apte à émettre un faisceau laser, qui est montée fixe par rapport à la table,
- un ou plusieurs miroirs pour réfléchir ledit faisceau et le diriger sensiblement parallèlement à la table,
- ledit concentrateur de faisceau qui est monté mobile par rapport à la table selon au moins deux directions orthogonales (deux axes X et Y), de manière à pouvoir se déplacer notamment selon un faisceau de segments de droites parallèles pour former des rainures diffusantes parallèles ;
ledit concentrateur (ou miroir paraboloïde) est en outre monté mobile (par rapport à la table) selon une troisième direction (troisième axe Z) généralement orthogonale aux deux premières, de manière à permettre de faire coïncider son plan focal de sortie avec la surface à usiner.

Un élargisseur ("expander") de faisceau, par exemple constitué par un couple de lentilles coaxiales de distances focales différentes, est de préférence disposé entre la source et le concentrateur, et est de préférence monté fixe par rapport à la table ; cet élargisseur permet de diminuer la dimension de la tache focale en sortie du concentrateur, par augmentation de l'ouverture du faisceau.

L'usinage d'un motif diffusant et réfractant à la surface et dans la masse de la plaque est obtenu en déplaçant la tache focale de sortie du concentrateur à la surface de la plaque ; en particulier cet usinage est obtenu en déplaçant un miroir paraboloïde maintenu par un coussin d'air (ou d'un autre gaz), à une distance constante de la surface à usiner, qui correspond à sa distance focale ; la vitesse de ce déplacement est de préférence choisie dans une plage allant de 0,2 mètre/seconde à 4 mètres/seconde, afin d'adapter la densité d'énergie rayonnée à la "dureté" du matériau à usiner, ainsi qu'à la profondeur et à la largeur moyenne désirée pour les dépressions formées.

L'utilisation d'un miroir paraboloïde permet d'améliorer la focalisation du faisceau réfléchi par le miroir pour la formation d'une petite tâche focale dans le plan focal.

Dans le cas préféré où l'injection de lumière est effectuée par un seul bord longitudinal d'une plaque guide rectangulaire, on équipe celle-ci d'un miroir s'étendant contre (et en regard du) bord longitudinal opposé à celui par lequel la lumière est injectée dans le guide ; pour le rétro-éclairage d'un afficheur LCD, on utilise de préférence une rangée de LED comme source de lumière, en particulier des LED émettant une lumière "blanche" ou bien une série de groupes de trois LED émettant une lumière trichrome permettant de faire une synthèse additive (rouge, vert, bleu, rouge, vert, bleu,...) ; pour diminuer l'encombrement du dispositif d'affichage, on peut utiliser des LED intégrées à un circuit CMS de forme allongée correspondant à la forme de la tranche, et on peut utiliser un guide plaque d'épaisseur allant de 1 à 2 mm environ.

Alternativement, la source peut être constituée par un tube tel qu'un tube CCFT ("Cold Cathod Fluorescent Tube").

La face principale (émettrice) du guide peut comporter une pluralité de motifs diffusants en forme de points (ou taches) ; cependant, de préférence, ces motifs s'étendent sous forme de segments de droite parallèles au bord par lequel la lumière est injectée, de profil (largeur et hauteur) sensiblement constant, et dont l'espacement varie sensiblement régulièrement et de façon non monotone : la distance entre deux segments adjacents diminue lorsqu'on se déplace de la tranche d'injection de lumière jusqu'à une zone du guide intermédiaire entre cette tranche d'injection et la tranche de réflexion qui s'étend sur le bord opposé du guide, puis cette distance augmente lorsqu'on se déplace de ladite zone intermédiaire jusqu'à ladite tranche de réflexion ; de préférence cette diminution et cette augmentation s'effectuent sensiblement (par exemple à 10 % près) selon une progression géométrique.

En variante ces motifs diffusants linéaires peuvent être sensiblement régulièrement espacés ; dans ce cas la largeur et/ou la profondeur de ladite dépression centrale (ou rainure) varie de façon non monotone de ladite tranche d'injection à ladite tranche de réflexion, en sens inverse de la variation décrite ci-avant de la distance entre rainures identiques ; à cet effet on peut faire varier, d'un motif diffusant à l'autre, l'énergie rayonnée, par exemple en faisant varier la puissance délivrée en sortie par la source laser, et/ou en faisant varier l'écartement entre le plan focal de sortie du concentrateur et la surface à usiner.

Ces variations non monotones sont également applicables lorsque deux sources sont prévues qui injectent la lumière par deux bords opposés de la plaque guide ; dans le cas où une seule source (linéaire) est utilisée et où la tranche opposée n'est pas équipée d'un miroir, on peut utiliser un espacement monotonement variable tel que décrit dans le document EP 945 674.

L'excellent rendement et la très bonne diffusion de lumière en sortie du guide peut, dans certaines applications, permettre de supprimer l'écran diffusant qui est habituellement prévu pour le rétro-éclairage d'un afficheur LCD et qui est généralement disposé entre le guide et l'afficheur ou en avant de l'afficheur.

Il a été en outre constaté que les guides de lumière selon l'invention sont particulièrement adaptés pour obtenir une diffusion très homogène de la lumière issue d'une pluralité de sources (LED), malgré le caractère discontinu (hétérogène) du flux lumineux injecté par la tranche dans cette configuration.

D'autres avantages et caractéristiques de l'invention seront compris au travers de la description suivante qui se réfère aux dessins annexés, qui illustrent sans aucun caractère limitatif des modes préférentiels de réalisation de l'invention.

La figure 1 illustre en perspective schématique deux motifs diffusants linéaires formés sur un guide de lumière et présentant des déformations irrégulières en surglace et des hétérogénéités en profondeur.

La figure 2 illustre de façon schématique les principaux composants d'un dispositif selon l'invention.

La figure 3 illustre en vue latérale schématique un détail de réalisation d'un support de concentrateur de faisceau laser ; la figure 5 illustre à échelle agrandie les moyens permettant la production d'un coussin d'air entre le talon du support de miroir concentrateur et la face supérieure de la plaque à usiner, ainsi que les moyens de production d'un rideau d'air protégeant ce miroir des projections résultant de l'usinage.

La figure 4 illustre en vue en perspective schématique, un afficheur LCD muni d'un guide selon l'invention.

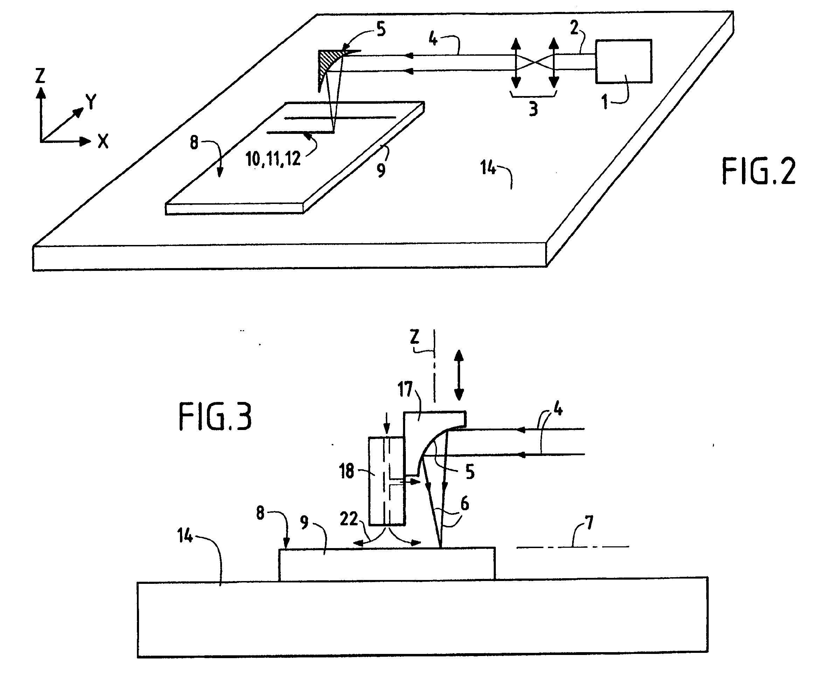

La source laser CO₂ 1 (figure 2) de puissance de préférence située dans une plage allant de 10 à 100 W, en particulier voisine de 50 W, produit en sortie un faisceau laser 2 dont le diamètre est de quelques millimètres ; ce faisceau traverse un "expander" 3 de sorte que le diamètre du faisceau laser 4 sortant est multiplié par un coefficient voisin de 2 à 3.

Le faisceau 4 est réfléchi par un miroir paraboloïde 5 qui produit en sortie un faisceau 6 convergent dans son plan focal (figure 3) ; lorsque ce plan 7 coïncide sensiblement avec un plan tangent à la face supérieure 8 d'une plaque 9 à usiner, l'intensité du rayonnement au point focal du miroir 5 provoque une élévation très importante de la température du matériau constituant la plaque, au voisinage de ce point focal ; il en résulte une déformation très rapide et irrégulière de la plaque dans ce voisinage, en surface et en profondeur ; en déplaçant le miroir 5 parallèlement à la plaque 9, il en résulte la formation d'une rainure 10 de profil irrégulier, qui est bordée par deux zones 11, 12 latérales en forme de bande ou bourrelets dans lesquelles on observe la formation de cratères et aspérités 13 disposés irrégulièrement.

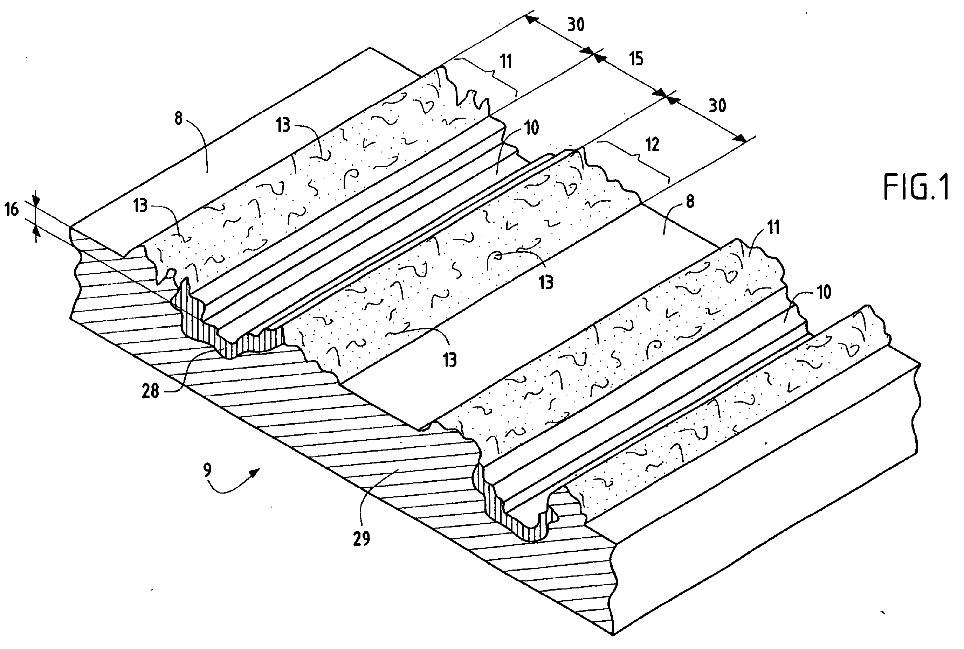

La plaque rectangulaire en matériau transparent 9 est posée à plat sur une table 14 à laquelle est solidarisée la source 1 ; le miroir 5 est monté mobile par rapport à la table 14 selon deux axes X et Y (figure 2) parallèles au plan de la table support 14 ; le déplacement selon ces deux axes du miroir 5 est obtenu par exemple à l'aide de deux translateurs (non représentés) linéaires (tels que des vérins ou convoyeurs) s'étendant selon deux axes orthogonaux et parallèles au plan de la table 14 ; ce mouvement est commandé par un ordinateur (non représenté) équipé d'un programme de calcul de la position, de l'écartement et/ou de la largeur 15 et de la profondeur 16 (figure 1) moyenne des motifs diffusants devant être formés sur la face 8 de la plaque 9, et/ou de la durée d'exposition et/ou de la vitesse de déplacement du miroir selon ces axes et/ou de l'intensité du faisceau 2, permettant d'obtenir des motifs de forme et caractéristiques diffusantes prédéterminées.

Par ailleurs le miroir 5 (et/ou son support 17) est monté mobile par rapport à la table 14 selon un axe Z perpendiculaire au plan XY de la table (figure 3) ; un talon 18 solidaire du support 17 et/ou du miroir 15 est muni à sa base d'une facette 19 plane pour "s'appuyer", par l'intermédiaire d'un coussin d'air, sur la face supérieure 8 de la plaque, au voisinage de la zone usinée par le faisceau 6 ; à cet effet la face 19 est percée d'un orifice 20 par lequel est éjecté de l'air sous pression déliré par une source (non représentée) et transporté jusqu'à l'orifice 20 par un conduit 21 prévu dans le talon 18 ; l'air éjecté par l'orifice 19 frappe la face 8 et s'écoule selon les flèches 22 (figure 5 illustrant à échelle agrandie un détail de la figure 3) ; le maintien du débit (et/ou de la pression) d'air éjecté à une valeur déterminée permet de maintenir la base 19 du talon 18 au dessus de la face 8, à une hauteur 24 constante de l'ordre quelques dizaines de microns ; par conséquent la plan focal 7 est maintenu à une distance constante (sensiblement nulle) de la face 8 ; ce dispositif permet de contrôler et/ou maintenir une intensité et une largeur d'impact déterminée du faisceau 6 sur la face 8 de la plaque.

L'air sous pression éjecté selon la flèche 23 en direction du faisceau 6 permet en outre d'éviter et/ou de limiter l'encrassement du miroir 5 par des projections résultant de l'altération thermique de la plaque 9 par le faisceau 6, en favorisant l'entraînement de particules susceptibles de se détacher de la plaque, en formant un rideau d'air protégeant le miroir ; cet effet peut être augmenté en prévoyant un deuxième orifice 25 de sortie d'air sous pression sur une face latérale 27 du talon 18, pour provoquer la formation d'un autre jet 26 dirigé vers le faisceau 6, ce qui favorise l'éloignement du miroir pour les particules résultant de l'attaque de la plaque par le faisceau.

Par référence à la figure 1, la face 8 de la plaque 9 en matière plastique transparente comporte deux motifs diffusants linéaires parallèles ; chaque motif comporte une rainure 10 de largeur 15 voisine de 20 microns et de profondeur 16 voisine de 15 microns ; chaque rainure est bordée d'une bande latérale gauche 11 et droite 12, chaque bande de largeur 30 voisine de 70 microns comportant des aspérités 13 irrégulièrement formées et disposées ; sous chaque motif 10, 11, 12 s'étend une bande de matière 28 de propriété optique (indice) sensiblement différente de celle de la partie 29 du matériau située entre deux motifs.

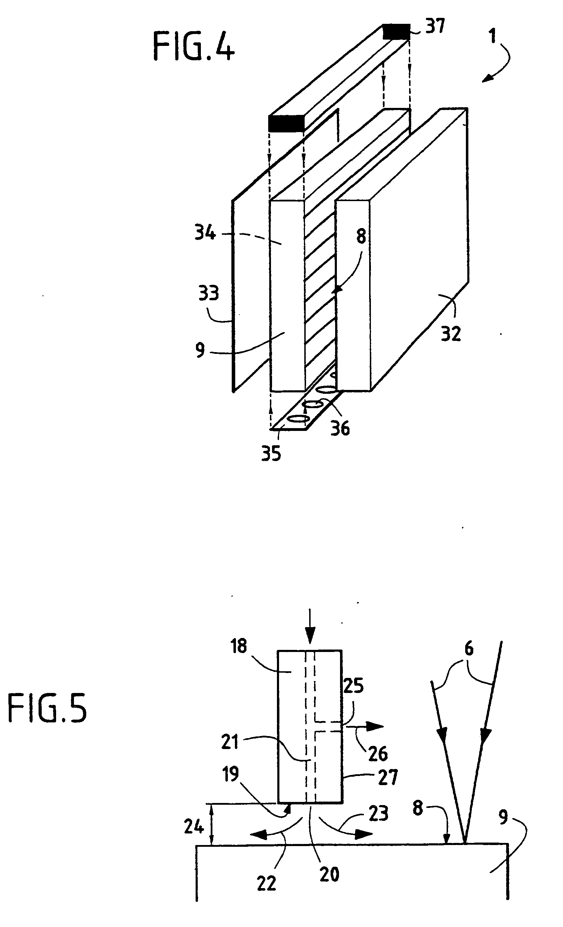

Par référence à la figure 4, le dispositif 31 d'affichage comporte un afficheur 32 à cristaux liquide contre la face arrière duquel est accolée la face 8 diffusante du guide 9 de lumière ; un écran mince 33 diffusant blanc est accolé contre la face arrière 34 du guide 9 qui est à l'opposé de la face 8 ; le long de la tranche inférieure de la plaque 9 s'étend un circuit 35 muni d'une pluralité de LED 36 sensiblement régulièrement espacées ; le long de la tranche supérieure de la plaque 9 s'étend un miroir 37 qui réinjecte dans le guide la partie (par exemple de l'ordre de 20 %) de lumière incidente non diffusée par la face 8 ; la luminance de la face 8 du guide 9 peut atteindre - et le cas échéant dépasser - 500 cd par mètre carré.

Selon une variante non représentée, le dispositif 31 d'affichage peut comporter deux guides 9 de lumière accolés : la face avant 8 d'un guide "arrière" étant accolée à la face arrière 34 d'un guide "avant", et chaque guide étant associé à une source respective ; on peut ainsi obtenir une luminance sensiblement doublée pour la face avant 8 du guide avant, soit de l'ordre de 1000 cd/m².

## Revendications

1. Guide (9) de lumière en forme de plaque dont une face (8) comporte une pluralité de motifs diffusants, dans lequel chacun desdits motifs comporte une dépression (10) centrale bordée de saillies périphériques (11, 12) dont l'amplitude est inférieure à celle de ladite dépression centrale **caracterisé en ce que** les saillies périphériques ont une amplitude irrégulière et comportent des zones hétérogènes (13) différant les unes des autres par leur forme et leur taille.

2. Guide selon la revendication 1 dans lequel ladite dépression est en forme de rainure, dans lequel lesdites saillies périphériques forment deux bandes latérales (11, 12) s'étendant le long des bords de la rainure, et dans lequel la profondeur de la rainure est située dans une plage allant de 5 à 50 microns.

3. Guide selon la revendication 1 ou 2 dans lequel la largeur moyenne desdits motifs diffusants est supérieure à 100 microns et inférieure à 400 microns.

4. Guide selon l'une quelconque des revendications 1 à 3 qui est constitué d'un matériau transmettant la lumière visible qui est choisi parmi le verre, le polycarbonate, le polymethacrylate de méthyle.

5. Guide selon l'une quelconque des revendications 1 à 4 dans lequel la largeur de ladite dépression est située dans une plage allant de 5 à 200 microns.

6. Guide selon l'une quelconque des revendications 1 à 5 dans lequel la largeur de ladite dépression centrale (10) s'étend selon une ligne continue et rectiligne le long de chacun des bords de laquelle s'étendent desdites saillies (11, 12) couvrant une zone de largeur (30) sensiblement égale à celle de ladite dépression centrale (10).

7. Dispositif d'affichage comportant un afficheur à cristaux liquides et un guide (9) de lumière en forme de plaque dont une face (8) comporte une pluralité de motifs diffusants conformément à l'une des revendications 1 à 6, dans lequel chacun desdits motifs comporte une dépression (10) centrale de forme irrégulière bordée de saillies périphériques (11, 12) dont l'amplitude est irrégulière et inférieure à celle de ladite dépression centrale et qui comportent des zones hétérogènes (13) différant les unes des autres par leur forme et leur taille.

8. Dispositif selon la revendication 7, dans lequel le guide (9) est conforme à la revendication 2 et est accolé contre la face arrière dudit afficheur à cristaux liquides, et ledit dispositif comporte en outre un miroir s'étendant le long d'une première tranche du guide (9), et une pluralité de LED montées sur un circuit et s'étendant le long d'une deuxième tranche du guide opposée à la première tranche.

9. Procédé de fabrication d'un guide (9) de lumière en forme de plaque dont une face (8) comporte une pluralité de motifs diffusants tel que défini à l'une des revendications 1 à 6, lesdits motifs étant obtenus à l'aide d'un faisceau laser, **caractérisé en ce que** on expose ladite face à un rayonnement dont l'intensité est située dans une plage allant de 10⁴ à 10⁷ W/cm², de manière à former des irrégularités en surface et en profondeur, et de sorte que chacun desdits motifs comporte une dépression (10) centrale bordée de saillies périphériques (11, 12) dont l'amplitude est irrégulière et inférieure à celle de ladite dépression centrale et qui comportent des zones hétérogènes (13) différant les unes des autres par leur forme et leur taille.

10. Procédé selon la revendication 9 dans lequel on expose ladite face à un rayonnement dont l'intensité est située dans une plage allant de 3.10⁴ à 3.10⁶ W/cm².

11. Procédé selon la revendication 9 ou 10, dans lequel on concentre le faisceau laser dans un plan focal (7) que l'on maintient sensiblement confondu avec la face (8) grâce à un appui par coussin d'air, sur la face (8), d'un support (17, 18) d'un concentrateur (5) du faisceau.

12. Procédé selon l'une quelconque des revendications 9 à 11, dans lequel on augmente le diamètre du faisceau laser (2, 4) émis par une source avant de le concentrer, et dans lequel on concentre le faisceau pour former une tache focale de diamètre situé dans une plage allant de 10 à 200 microns.

13. Procédé selon l'une quelconque des revendications 9 à 12 dans lequel on déplace le faisceau (6) concentré selon deux axes (X,Y) et à une vitesse choisie dans une plage allant de 0,2 mètre/seconde à 4 mètres/seconde.

14. Dispositif de fabrication d'un guide (9) de lumière en forme de plaque selon l'une des revendications 1 à 6, dont une face (8) comporte une pluralité de motifs diffusants obtenues à l'aide d'un faisceau laser, comportant un concentrateur (5) du faisceau laser et des moyens (18, 19, 20, 21) permettant de faire sensiblement coïncider le plan focal (7) de sortie du concentrateur avec la face (8) par l'intermédiaire d'un coussin d'air, pour obtenir un faisceau concentré **caractérisé en ce qu'**il est adapté pour former des motifs comportant une dépression (10) centrale bordée de saillies périphériques (11, 12) dont l'amplitude est irrégulière et inférieure à celle de ladite dépression centrale et qui comportent des zones hétérogènes (13) différant les unes des autres par leur forme et leur taille.

15. Dispositif selon la revendication 14, qui comporte :
- une table (14) apte à supporter une plaque (9) de matériau transparent à usiner,
- une source (1) laser apte à émettre un faisceau (2) laser, qui est montée fixe par rapport à la table,
- un ou plusieurs miroirs pour réfléchir ledit faisceau et le diriger sensiblement parallèlement à la table,
- un concentrateur (5) de faisceau qui est monté mobile par rapport à la table selon au moins deux premières directions (X et Y) orthogonales, de manière à pouvoir être déplacé notamment selon un faisceau de segments de droites parallèles pour former des rainures diffusantes parallèles,
ledit concentrateur étant en outre monté mobile par rapport à la table selon une troisième direction généralement orthogonale aux deux premières directions, de manière à permettre de faire coïncider son plan focal de sortie avec la surface à usiner.

16. Dispositif selon la revendication 14 ou 15 qui comporte en outre un élargisseur (3) de faisceau, disposé entre la source laser (1) et le concentrateur de faisceau (5).

17. Dispositif selon l'une quelconque des revendications 14 à 16, dans lequel le concentrateur comporte un miroir paraboloïde.

18. Dispositif selon l'une quelconque des revendications 14 à 17 qui comporte en outre des moyens de production d'un jet ou d'un rideau de gaz pour protéger le concentrateur et éviter ou limiter son encrassement.

## Claims

1. A light guide (9) in the form of a plate having a face (8) that includes a plurality of diffusing patterns, in which each of said patterns comprises a central depression (10) edged with peripheral projections (11, 12) whose amplitude is less than the amplitude of said central depression, the guide being **characterised in that** the peripheral projections have an irregular amplitude and include non-uniform zones (13) which differ from one another in size and shape.

2. A guide according to claim 1, in which said depression is in the form of a groove, in which said peripheral projections form two side strips (11, 12) extending along the edges of the groove, and in which the depth of the groove lies in the range 5 µm to 50 µm.

3. A guide according to claim 1 or 2, in which the mean width of said diffusing patterns is greater than 100 µm and less than 400 µm.

4. A guide according to any one of claims 1 to 3, which is constituted by a material that transmits visible light and selected from glass, polycarbonate, and polymethyl methacrylate.

5. A guide according to any one of claims 1 to 4, in which the width of said depression lies in the range 5 µm to 200 µm.

6. A guide according to any one of claims 1 to 5, in which the width of said central depression (10) extends along a continuous rectilinear line along each of the edges from which said projections (11, 12) extend thus covering a zone of width (30) substantially equal to that of said central depression (10).

7. A display device comprising a liquid crystal display and a light guide (9) in the form of a plate having a face (8) having a plurality of diffusing patterns in accordance with one of claims 1 to 6, in which each of said patterns comprises a central depression (10) of irregular shape edged with peripheral projections (11, 12) whose amplitude is irregular and less than the amplitude of said central depression and which include non-uniform zones (13) which differ from one another in size and shape.

8. A device according to claim 7, in which the guide (9) is in accordance with claim 2 and is against the rear face of said liquid crystal display, and said device further comprises a mirror extending along a first edge of the guide (9) and a plurality of LEDs mounted on a circuit extending along a second edge of the light guide, opposite its first edge.

9. A method of manufacturing a light guide (9) in the form of a plate a face (8) of which has a plurality of diffusing patterns as defined in one of claims 1 to 6, said patterns being obtained by means of a laser beam, the method being **characterised in that** said face is exposed to radiation of intensity lying in the range 10⁴ watts per square centimetre (W/cm²) to 10⁷ W/cm², so as to form surface irregularities and irregularities in depth, and such that each of said patterns includes a central depression (10) edged with peripheral projections (11, 12) whose amplitude is irregular and less than the amplitude of said central depression and which include non-uniform zones (13) which differ from one another in size and shape.

10. A method according to claim 9, in which said face is exposed to radiation of intensity lying in the range 3×10⁴ W/cm² to 3×10⁶ W/cm².

11. A method according to claim 9 or 10, in which the laser beam is concentrated in a focal plane (7) which is maintained substantially in coincidence with the face (8) by causing a support (17, 18) for a beam concentrator (5) to bear against the face (8) via a cushion of air.

12. A method according to any one of claims 9 to 11, in which the diameter of the laser beam (2, 4) emitted by a source is enlarged prior to being concentrated, and in which the beam is concentrated to form a focal spot of diameter lying in the range 10 µm to 200 µm.

13. A method according to any one of claims 9 to 12, in which the concentrated beam (6) is displaced along two axes (X, Y) at a speed selected to lie in the range 0.2 meter/second (m/s) to 4 m/s.

14. Apparatus for manufacturing a light guide (9) in the form of a plate according to one of claims 1 to 6, having a face (8) with a plurality of diffusing patterns obtained by means of a laser beam, said apparatus comprising a laser beam concentrator (5) and means (18, 19, 20, 21) enabling the outlet focal plane (7) of the concentrator to be caused to coincide substantially with said face (8) via a cushion of air, so as to obtain a concentrated beam of patterns comprising a central depression (10) edged with peripheral projections (11, 12) whose amplitude is irregular and less than the amplitude of said central depression and which include non-uniform zones (13) which differ from one another in size and shape.

15. Apparatus according to claim 14, comprising:
- a bench (14) suitable for supporting a plate (9) of transparent material to be machined;
- a laser source (1) suitable for emitting a laser beam (2) and mounted in a fixed position relative to the bench;
- one or more mirrors for reflecting said beam and directing it substantially parallel to the bench; and
- a beam concentrator (5) mounted to move relative to the bench along at least two orthogonal first directions (X and Y) so as to be capable of being displaced in particular along a grid of parallel straight segments to form parallel diffusing grooves;
said concentrator also being mounted to move relative to the bench along a third direction that is generally orthogonal to the two first directions, in such a manner as to enable its outlet focal plane to be brought into coincidence with the surface to be machined.

16. Apparatus according to claim 14 or 15, further comprising a beam enlarger (3) disposed between the laser source (1) and the beam concentrator (5).

17. Apparatus according to any one of claims 14 to 16, in which the concentrator comprises a parabolic mirror.

18. Apparatus according to any one of claims 14 to 17, further including means for producing a jet or a curtain of gas to protect the concentrator and prevent or limit dirtying thereof.

## Patentansprüche

1. Plattenförmiger Lichtleiter (9), dessen eine Fläche (8) eine Vielzahl von Streumustern aufweist, wobei jedes der Muster eine mittlere Vertiefung (10) aufweist, die von randseitigen Vorsprüngen (11, 12) gesäumt ist, deren Ausdehnung geringer als die der mittleren Vertiefung ist, **dadurch gekennzeichnet, daß** die randseitigen Vorsprünge eine unregelmäßige Ausdehnung aufweisen und heterogene Bereiche (13) umfassen, die sich durch ihre Form und ihre Größe voneinander unterscheiden.

2. Leiter nach Anspruch 1, bei dem die Vertiefung nutförmig ausgebildet ist, bei dem die randseitigen Vorsprünge zwei Seitenstreifen (11, 12) bilden, die sich entlang der Ränder der Nut erstrecken, und bei dem die Tiefe der Nut in einem Bereich zwischen 5 und 50 Mikron liegt.

3. Leiter nach Anspruch 1 oder 2, bei dem die durchschnittliche Breite der genannten Streumuster größer als 100 Mikron und kleiner als 400 Mikron ist.

4. Leiter nach irgendeinem der Ansprüche 1 bis 3, der aus einem das sichtbare Licht übertragenden Material besteht, welches aus Glas, Polycarbonat und Polymethylmethacrylat ausgewählt ist.

5. Leiter nach irgendeinem der Ansprüche 1 bis 4, bei dem die Breite der Vertiefung in einem Bereich zwischen 5 und 200 Mikron liegt.

6. Leiter nach irgendeinem der Ansprüche 1 bis 5, bei dem sich die Breite der mittleren Vertiefung (10) entlang einer durchgehenden und geraden Linie erstreckt, entlang eines jeden deren Ränder sich Vorsprünge (11, 12) erstrecken, die einen Bereich bedecken, dessen Breite (30) im wesentlichen gleich der Breite der mittleren Vertiefung (10) ist.

7. Anzeigevorrichtung mit einer Flüssigkristallanzeige und einem plattenförmigen Lichtleiter (9) nach einem der Ansprüche 1 bis 6, dessen eine Fläche (8) eine Vielzahl von Streumustern aufweist, bei der ein jedes der genannten Muster eine mittlere Vertiefung (10) unregelmäßiger Form aufweist, die von randseitigen Vorsprüngen (11, 12) gesäumt ist, deren Ausdehnung unregelmäßig und geringer als die der mittleren Vertiefung ist und die heterogene Bereiche (13) umfassen, die sich durch ihre Form und ihre Größe voneinander unterscheiden.

8. Vorrichtung nach Anspruch 7, bei welcher der Leiter (9) entsprechend Anspruch 2 ausgeführt und an die Rückseite der Flüssigkristallanzeige angefügt ist, und die Vorrichtung ferner einen Spiegel, der sich entlang einer ersten Kante des Leiters (9) erstreckt, sowie eine Vielzahl von LEDs umfaßt, die an einer Schaltung angebracht sind und die sich entlang einer der ersten Kante gegenüberliegenden zweiten Kante des Leiters erstrecken.

9. Verfahren zur Herstellung eines plattenförmigen Lichtleiters (9) - wie er in einem der Ansprüche 1 bis 6 definiert ist - dessen eine Fläche (8) eine Vielzahl von Streumustern aufweist, wobei die genannten Muster mit Hilfe eine Laserstrahls erhalten werden, **dadurch gekennzeichnet, daß** die genannte Fläche einer Strahlung ausgesetzt wird, deren Stärke in einem Bereich zwischen 10⁴ und 10⁷ W/cm² liegt, so daß Oberflächen- und Tiefenunregelmäßigkeiten gebildet werden und so daß ein jedes der Muster eine mittlere Vertiefung (10) aufweist, die von randseitigen Vorsprüngen (11, 12) gesäumt ist, deren Ausdehnung unregelmäßig und geringer als die der genannten mittleren Vertiefung ist und die heterogene Bereiche (13) umfassen, welche sich durch ihre Form und ihre Größe voneinander unterscheiden.

10. Verfahren nach Anspruch 9, bei dem die genannte Fläche einer Strahlung ausgesetzt wird, deren Stärke in einem Bereich zwischen 3 x 10⁴ und 3 x 10⁶ W/cm² liegt.

11. Verfahren nach Anspruch 9 oder 10, bei dem der Laserstrahl in einer Brennebene (7) konzentriert wird, die dank einer Luftkissenabstützung eines Trägers (17, 18) eines Strahlkonzentrators (5) auf der Fläche (8) im wesentlichen mit der Fläche (8) zusammenfallend gehalten wird.

12. Verfahren nach irgendeinem der Ansprüche 9 bis 11, bei dem der Durchmesser des durch eine Quelle ausgesandten Laserstrahls (2, 4) vor dessen Konzentration vergrößert wird, und bei dem der Strahl konzentriert wird, um einen Brennfleck zu bilden, dessen Durchmesser in einem Bereich zwischen 10 und 200 Mikron liegt.

13. Verfahren nach irgendeinem der Ansprüche 9 bis 12, bei dem der konzentrierte Strahl (6) entlang zweiter Achsen (X, Y) und mit einer Geschwindigkeit bewegt wird, die aus einem Bereich zwischen 0,2 Metern/Sekunde und 4 Metern/Sekunde ausgewählt ist.

14. Vorrichtung zur Herstellung eines plattenförmigen Lichtleiters (9) nach einem der Ansprüche 1 bis 6, dessen eine Fläche (8) eine Vielzahl von Streumustern aufweist, die mit Hilfe eines Laserstrahls erhalten werden, umfassend einen Laserstrahl-Konzentrator (5) sowie Mittel (18, 19, 20, 21), die ermöglichen, die Ausgangsbrennebene (7) des Konzentrators mittels eines Luftkissens mit der Fläche (8) im wesentlichen zusammenfallen zu lassen, um einen konzentrierten Strahl zu erhalten, **dadurch gekennzeichnet, daß** sie entsprechend ausgebildet ist, um Muster zu bilden, die eine mittlere Vertiefung (10) aufweisen, welche von randseitigen Vorsprüngen (11, 12) gesäumt ist, deren Ausdehnung unregelmäßig und geringer als die der genannten mittleren Vertiefung ist und die heterogene Bereiche (13) aufweisen, die sich durch ihre Form und ihre Größe voneinander unterscheiden.

15. Vorrichtung nach Anspruch 14, die folgendes umfaßt:
- einen Tisch (14), der geeignet ist, eine zu bearbeitende Platte (9) aus transparentem Material zu tragen,
- eine Laserquelle (1), die geeignet ist, einen Laserstrahl (2) auszusenden und die in bezug auf den Tisch fest angebracht ist,
- einen oder mehrere Spiegel, um den genannten Strahl zu reflektieren und um ihn im wesentlichen parallel zum Tisch zu lenken,
- - einen Strahlkonzentrator (5) der in bezug auf den Tisch entlang wenigstens zweier erster orthogonaler Richtungen (X und Y) beweglich angebracht ist, so daß er vor allem entlang eines Bündels von Abschnitten paralleler Geraden bewegt werden kann, um parallele Streunuten zu bilden,
wobei der Konzentrator ferner in bezug auf den Tisch entlang einer zu den zwei ersten Richtungen im allgemeinen orthogonalen dritten Richtung beweglich angebracht ist, so daß ermöglicht wird, dessen Ausgangsbrennebene mit der zu bearbeitenden Fläche zusammenfallen zu lassen.

16. Vorrichtung nach Anspruch 14 oder 15, die ferner einen Strahlaufweiter (3) umfaßt, der zwischen der Laserquelle (1) und dem Strahlkonzentrator (5) angeordnet ist.

17. Vorrichtung nach irgendeinem der Ansprüche 14 bis 16, bei welcher der Konzentrator einen Paraboloidspiegel umfaßt.

18. Vorrichtung nach irgendeinem der Ansprüche 14 bis 17, die außerdem Mittel zur Erzeugung eines Gasstrahls oder eines Gasvorhangs umfaßt, um den Konzentrator zu schützen und um dessen Verschmutzen zu verhindern oder zu begrenzen.
